# EUROPEAN PATENT SPECIFICATION

(11) **EP 3 151 683 B1**
(45) Date of publication and mention of the grant of the patent: **05.09.2018**
(21) Application number: 14734293.5
(22) Date of filing: 09.05.2014
(51) Int. Cl.: A23L 7/13, A23L 27/00, A21C 15/00

(54) **APPARATUS AND METHOD OF SEASONING TACO SHELLS**
VORRICHTUNG UND VERFAHREN ZUM WÜRZEN VON TACO-SCHALEN
APPAREIL ET PROCÉDÉ D'ASSAISONNEMENT DE COQUILLES À TACOS

(43) Date of publication of application: 12.04.2017
(73) Proprietor: General Mills, Inc., Minneapolis, Minnesota 55440 (US)
(72) Inventor: ELAYEDATH, Shivakumar, Eden Prairie, Minnesota 55346 (US); TALIJAN, Zoran, Wayzata, Minnesota 55391-1374 (US); WLASCHIN, Aaron P., St. Paul, Minnesota 55104 (US)
(74) Representative: Vossius & Partner Patentanwälte Rechtsanwälte mbB
(86) International application number: PCT/US2014/037477
(87) International publication number: WO 2015/171158

(56) References cited:
- EP-A1- 1 985 188
- WO-A1-01/62105
- WO-A1-99/01039
- WO-A2-2013/052659
- US-A- 6 153 236
- US-A1- 2012 201 934

## Description

### BACKGROUND

Taco shells made from corn are commonly available in the traditional U-shaped design and nominally have a mild corn flavor. Taco shells have evolved to include improved versions that are self-standing. Self-standing taco shells, unlike U-shaped taco shells, rely upon their unique shape to stand freely without the assistance of a secondary holding device or human intervention.

Consumer acceptance of self-standing taco shells has been appreciably high. To capitalize upon the success of self-standing taco shells and to continue to increase consumer interest and demand for taco shells it is desirable to flavor taco shells. The addition of new flavor varieties to existing products in this manner is a common and successful marketing strategy known as creating line extensions. Topically flavored fried snack products fabricated from fried masa dough pieces are known as well as other fried snack products. These products are typically consumed without eating utensils and thus are colloquially referred to as "finger foods". Typically, an unflavored base is prepared from an unflavored masa dough that is formed into pieces and deep fat fried. While still warm, a topical seasoning or flavor coating can be applied typically a dry blend of salt and various seasoning dry powders such as dried cheese solids.

While useful, the topical application of dry seasoning flavors results in a product that often undesirably results in products that transfer residual amounts of the dry powder topical seasoning blend from the finger food to the consumer's fingers resulting in an undesirable amount of untidiness. Also, food products prepared from flavored dough formulations that do not include a topical seasoning are well known. However, while incorporating flavors into traditional U-shaped taco shells and more preferably self-standing taco shells is highly desired there are significant challenges to manufacturing, packaging and consumer acceptance of flavored taco shells.

Flavoring large flour tortilla shells gained great popularity as wrap sandwiches dominated the food service landscape in the late 90's and beyond. However, wheat flour tortillas differ greatly from corn masa tortillas. Wheat flour tortillas have a unique capacity for accepting ground garden vegetable and juice additives. Due in large part to the nature of wheat flour dough, the process of adding ground garden vegetable and juice additives to wheat flour tortillas is no more difficult to someone skilled in the art than flavoring traditional loaf bread. In contrast, corn masa dough does not readily accept any additives especially ground garden vegetable and juice additives without severe detrimental impact upon the performance of the dough. US 2012/201934 A1 discloses topically seasoned taco shells, and methods and apparatuses for producing the same.

### SUMMARY

The present invention relates to a method and apparatus for seasoning food products and is defined by the claims.

Also disclosed herein is a method of seasoning a cooked food product includes applying a non-aqueous liquid seasoning mixture onto a surface of a cooked food product. The seasoning mixture includes at least 35% wt solids.

Further disclosed herein is an apparatus for seasoning a cooked food product includes a spinning disc spray chamber comprising a spinning disc sprayer having a product zone configured to receive a non-aqueous liquid seasoning mixture from the spinning disc sprayer. The non-aqueous liquid seasoning mixture includes at least 35% wt solids. A food product conveyor moves a cooked food product through the product zone.

These and various other features and advantages will be apparent from a reading of the following detailed description.

### BRIEF DESCRIPTION OF THE DRAWINGS

The disclosure may be more completely understood in consideration of the following detailed description of various embodiments of the disclosure in connection with the accompanying drawings, in which:
**FIG.** 1 is a schematic block flow diagram of an illustrative food product seasoning system; and
**FIG.** 2 is flow diagram of an illustrative method of seasoning a taco shell.

### DETAILED DESCRIPTION

In the following detailed description, reference is made to the accompanying drawings that form a part hereof, and in which are shown by way of illustration several specific embodiments. It is to be understood that other embodiments are contemplated and may be made without departing from the scope or spirit of the present disclosure. The following detailed description, therefore, is not to be taken in a limiting sense.

All scientific and technical terms used herein have meanings commonly used in the art unless otherwise specified. The definitions provided herein are to facilitate understanding of certain terms used frequently herein and are not meant to limit the scope of the present disclosure.

Unless otherwise indicated, all numbers expressing feature sizes, amounts, and physical properties used in the specification and claims are to be understood as being modified in all instances by the term "about." Accordingly, unless indicated to the contrary, the numerical parameters set forth in the foregoing specification and attached claims are approximations that can vary depending upon the properties sought to be obtained by those skilled in the art utilizing the teachings disclosed herein.

The recitation of numerical ranges by endpoints includes all numbers subsumed within that range (e.g. 1 to 5 includes 1, 1.5, 2, 2.75, 3, 3.80, 4, and 5) and any range within that range.

As used in this specification and the appended claims, the singular forms "a", "an", and "the" encompass embodiments having plural referents, unless the content clearly dictates otherwise.

As used in this specification and the appended claims, the term "or" is generally employed in its sense including "and/or" unless the content clearly dictates otherwise.

As used herein, "have", "having", "include", "including", "comprise", "comprising" or the like are used in their open ended sense, and generally mean "including, but not limited to". It will be understood that "consisting essentially of', "consisting of', and the like are subsumed in "comprising," and the like.

Throughout the specification and claims, percentages are by weight and temperatures in degrees Celsius unless otherwise indicate.

Masa means "dough" in Spanish, but in Mexico it is generally understood as corn dough. Masa is made by boiling corn kernels in powdered unslaked lime (calcium oxide), washing them and then grinding. Enough water is then mixed into the meal to make a thick paste or dough.

Taco shells are made by cooking (for example, deep-fat frying) white or yellow corn tortillas held in a mold. Corn tortillas are made from masa dough. One generally accepted way to make masa dough is to heat dried corn kernels in a slightly corrosive solution of water and lime. This process assists in removal of the kernel's tough outer skin. Once the skins are removed, kernels can be rinsed and boiled in fresh water, drained and mashed into masa dough. Small portions of masa dough are flattened into the desired diameter and thickness for tortillas and cooked very quickly often on each side on a hot flat surface. Creating masa dough of the correct consistency is an important step in the creation of corn tortillas. Adding flavor ingredients to masa dough prior to forming flavored tortillas and subsequent molding and frying flavored tortillas into flavored taco shells significantly impairs the manufacturing process and yields a high number of unacceptable shells characterized in part by an unacceptably narrow gap between the sides of the shell. This problem is apparent upon removal of hot flavored corn tortilla taco shells from the fryer. Hot flavored corn tortilla taco shells are plastic and pliable upon removal from the fryer. Gravity immediately acts upon hot shells causing a predictable collapse in the overall structure of the self-standing taco shell not exhibited with unflavored masa dough. One theory as to the cause of this problem is that flavor ingredients disrupt the natural cohesive structure of prepared masa dough creating a softer less cohesive dough. This problem can also be a localized phenomenon whereby the opening of flavored self-standing taco shells closes appreciably due to a convergence of the opposed sidewalls.

The present disclosure relates to a method and apparatus for seasoning food products such as taco shells, in particular the present disclosure relates to the seasoning of cooked (e.g., fried) taco shells with a non-aqueous liquid seasoning mixture having a high solids content of at least 35% wt solids, or at least 45% wt for example. These high solids content, non-aqueous liquid seasoning mixtures are applied or sprayed onto the surface of a cooked or fried taco shell with a spinning disc sprayer.

Applicants have found that seasoning applied in this manner remains bound to the surface of the taco shell and imparts the desired flavor experience without impairing the physical properties of the taco shell described above when seasoning is combined prior to frying or cooking the taco shell. The seasoning particles can diffuse into the cooked food surface with the oil, allowing the seasoning to bind to the food product surface. While the present disclosure is not so limited, an appreciation of various aspects of the disclosure will be gained through a discussion of the examples provided below.

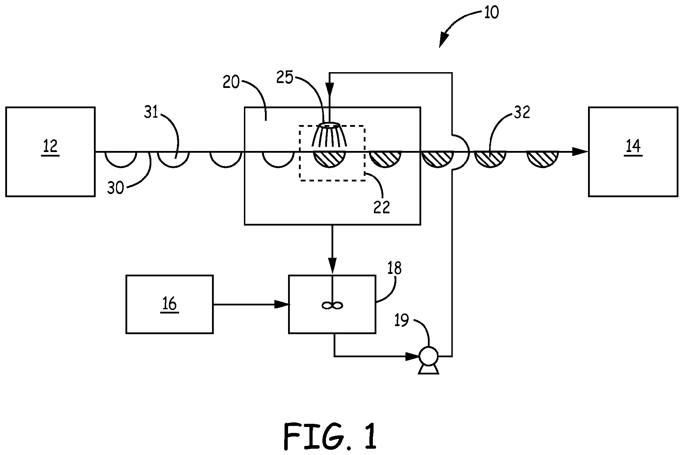

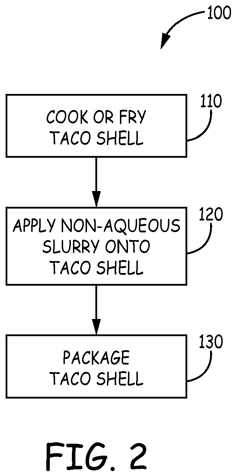

**FIG. 1** is a schematic block flow diagram of an illustrative food product seasoning system **10.** **FIG. 2** is flow diagram of an illustrative method **100** of seasoning a taco shell. While a taco shell is illustrated, it is understood that any cooked corn masa food product can be utilized in the described method and apparatus.

In one illustrative embodiment, a method of seasoning a fried food product **100** includes applying a non-aqueous liquid seasoning mixture onto a surface of a cooked food product, such as a taco shell, for example (see block **120**). The seasoning mixture includes at least 35% wt solids. The fried food product or taco shell can include or be formed of corn masa. The taco shell or fried food product can be cooked (e.g., fried) prior to the application of the non-aqueous liquid seasoning mixture onto a surface of a cooked food product, such as a taco shell, for example (see block **110**). Then the seasoned taco shell or fried food product can be packaged or further processed (see block **130**).

An apparatus **10** for seasoning a fried food product includes a spinning disc spray chamber **20.** The spray chamber **20** houses a spinning disc sprayer **25**. The spray chamber **20** has a product zone **22** configured to receive a non-aqueous liquid seasoning mixture **16** from the spinning disc sprayer **25.** The non-aqueous liquid seasoning mixture **16** includes at least 35% wt solids or at least 40% wt solids or in a range from 45 to 60% wt solids. A food product conveyor **30** continuously moves a food product **31** through the product zone **22** in a direction generally orthogonal non-aqueous liquid seasoning mixture spray direction (as illustrated by the directions of the arrows), although the spray direction can be directed in any useful direction relative to the food product conveyor **30** direction. Surprising the spinning disc sprayer **25** coats the non-aqueous liquid seasoning mixture onto a surface of a cooked food product uniformly even though the surface of a taco shell is a 3-D surface that has portions at varying distances from the spinning disc sprayer **25**.

The food product conveyor **30** continuously moves or conveys food product **31** through the product zone **22** and forming a seasoned food product **32** exiting the product zone **22** and spray chamber **20.** The seasoned food product **32** is conveyed to a packing operation or further processing operation **14.** The food product conveyor **30** continuously moves or conveys food product **31** from a cooking or frying operation **12** to the spray chamber **20.** The food product **31** can be located near the spray chamber **20** such that the food product **31** is still warm when the non-aqueous liquid seasoning mixture **16** is applied to the food product **31.**

The packaging unit operation **14** can include stacking a quantity (e.g., 3-6) of such flavored square bottomed (for example) taco shells in the form of a nested array (not shown) and provided in a suitable consumer food packaging such as being mounted upon a paperboard support such as U-board and over wrapped with a flexible packaging film (e.g., a clear shrink-wrap packaging film). If desired, a spacer insert can be provided between the sides of the top nested shell to provide additional protection against breakage such as by unintended compression of the packaged food article. In many embodiments, the wrapped nested array of flavored taco shells is disposed within an outer protective carton.

The non-aqueous liquid seasoning mixture **16** can be mixed in a mixing tank **18** that applies a large shear to the non-aqueous liquid seasoning mixture **16** to maintain the non-aqueous liquid seasoning mixture **16** in suspension. A pump **19** then conveys the suspended non-aqueous liquid seasoning mixture **16** to the spinning disc sprayer **25.** Non-aqueous liquid seasoning mixture **16** that is not adhered to the food product **31** is recycled into the mixing tank **18** and is again pumped to the spinning disc sprayer **25.** In many embodiments, the applying step can dispose from 1 to 3 grams of non-aqueous liquid seasoning mixture onto the surface of the food product.

The spinning disc sprayer **25** can be any useful spinning disc sprayer. A spinning disc sprayer is also referred to as a rotary atomizer. A spinning disc sprayer uses a high speed rotating disk, cup or wheel to discharge liquid at high speed to the perimeter, forming a hollow cone spray. The rotational speed of the disc controls the drop size. One useful spinning disc sprayer **25** is commercially available from Arcall plc., Dorset England available under the trade designation TNA Intellispin Model 712S, for example.

The pump **19** that conveys the suspended non-aqueous liquid seasoning mixture **16** to the spinning disc sprayer **25** is preferably a progressive cavity pump. A progressive cavity pump is a type of positive displacement pump and is also known as a progressing cavity pump, eccentric screw pump or cavity pump. It transfers fluid by means of the progress, through the pump, of a sequence of small, fixed shape, discrete cavities, as its rotor is turned. This leads to the volumetric flow rate being proportional to the rotation rate (bidirectionally) and to low levels of shearing being applied to the pumped fluid. Hence these pumps have application in fluid metering and pumping of viscous or shear-sensitive materials. The cavities taper down toward their ends and overlap with their neighbors, so that, in general, no flow pulsing is caused by the arrival of cavities at the outlet, other than that caused by compression of the fluid or pump components.

The progressive cavity pump consists of a helical rotor and a twin helix, twice the wavelength and double the diameter helical hole in a rubber stator. The rotor seals tightly against the rubber stator as it rotates, forming a set of fixed-size cavities in between. The cavities move when the rotor is rotated but their shape or volume does not change. The pumped material is moved inside the cavities.

In operation, progressive cavity pumps are fundamentally fixed flow rate pumps, like piston pumps and peristaltic pumps. This type of pump moves a set amount of material and can generate extremely high pressures at the outlet of the pump if the flow rate is restricted. To prevent this, these pumps are often fitted with cut-off pressure switches, rupture discs (deliberately weak and easily replaced), or a bypass pipe that allows a variable amount of a fluid to return to the inlet.

At the points where the rotor touches the stator, the surfaces are generally traveling transversely, so small areas of sliding contact occur. These areas are lubricated by the fluid being pumped (hydrodynamic lubrication). While progressive cavity pumps offer long life and reliable service transporting thick or lumpy fluids, abrasive fluids can significantly shorten the life of the stator. However, slurries (particulates in a medium such as the non-aqueous liquid seasoning mixture) can be pumped reliably if the medium is viscous enough to maintain a lubrication layer around the particles and so protect the stator. One useful progressive cavity pump is commercially available from Moyno Inc., Springfield, Ohio commercially available under the trade designation Model FB2E-SSE-3SBB.

The non-aqueous liquid seasoning mixture **16** can be heated to a temperature in a range from 38 to 60 degrees centigrade, and applied onto the surface of a cooked food product at this elevated temperature range. Applicants have found that applying the non-aqueous liquid seasoning mixture **16** at this elevated temperate range improves taste experience of the flavored taco shell.

The non-aqueous liquid seasoning mixture includes at least 35% wt solids or at least 40% wt solids or at least 45% wt solids and has a viscosity of at least 1000 cps or at least 1500 cps or at least 2000 cps. This solids content and viscosity of the non-aqueous liquid seasoning mixture or slurry is normally un-workable with conventional spray nozzles. In many embodiments, the non-aqueous liquid seasoning mixture includes a range from 45 to 60% wt solids and has a viscosity of at least 1500 cps or at least 2000 cps. The non-aqueous liquid seasoning mixture includes particles having a size of at least 250 or at least 300 micrometers and the non-aqueous liquid seasoning mixture includes particles having a size of less than 30 or less than 20 micrometers. These non-aqueous liquid seasoning mixtures can be described as a slurry and can be difficult to spray with traditional spray nozzles, especially particles sizes that are at least 250 or at least 300 micrometers in the non-aqueous liquid seasoning mixture.

The non-aqueous liquid of the seasoning mixture can be a mixture of an oil and solid seasoning material. In many embodiments the non-aqueous liquid of the seasoning mixture is a solid at a temperature of 27 degrees or at 30 degrees. In particular the oil or carrier portion of the non-aqueous liquid of the seasoning mixture is a solid at a temperature of 27 degrees or at 30 degrees. One illustrative oil is palm oil. Applicants have found that the oil or carrier portion of the non-aqueous liquid of the seasoning mixture is preferably the same type of oil that was used to cook or fry the corn masa product or taco shell.

It is preferred that the non-aqueous liquid of the seasoning mixture have a minimal amount or moisture. In many embodiments the non-aqueous liquid of the seasoning mixture has less than 1% wt water or less than 0.5% wt water or less than 0.1% wt water or moisture content.

Seasoning blends or seasoning mixtures suitable for inclusion in the non-aqueous liquid of the seasoning mixture can be dry and may or may not contain dairy ingredients. Dried ground garden vegetables herbs and spices and mixtures thereof are all suitable for creating a seasoning blend. Dried ground garden vegetables can include but is not limited to celery, carrot, tomato, onion, peppers (all varieties), beets, broccoli, spinach, and kale. Dried ground herbs and spices can include but is not limited to basil, rosemary, thyme, oregano, chives, garlic, peppercorns, cloves, cinnamon, paprika, cumin, anise, mustard and ginger. Dried seasonings may additionally contain minor amounts of preservatives, fillers and anti-caking or flowing agents to extend the shelf-life and ease of use of these ingredients. Seasoning blends may contain dairy ingredients and flavorings to impart dairy flavors to the seasoned taco shell such as nacho cheese. Dairy ingredients may include but are not limited to dried ground cheese, cheese powder, whey powder, dried milk powder and combinations thereof. In some embodiments the seasoning blend or seasoning mixture includes a lime flavoring. In some embodiments the seasoning blend or seasoning mixture includes a ranch flavoring. In some embodiments the seasoning blend or seasoning mixture includes a jalapeño flavoring. In some embodiments the seasoning blend or seasoning mixture includes a chipotle flavoring. In some embodiments the seasoning blend or seasoning mixture includes a buffalo sauce flavoring.

Any commercially available corn masa flour can be selected for use in masa dough and resulting cooked or fired food product such as taco shells. For example, commercially available corn masa flour can be obtained from Cargill, Inc. located in Minnesota USA. While preferred for use herein are masa doughs comprising one or more corn (maize) flour ingredients (e.g., a mixture of white and yellow corn flours), the skilled artisan will appreciate that in less preferred embodiments, the masa dough can include minor amounts of one or more farinaceous ingredients such as flours from other non-maize cereal grains (major cereal grains such as barley, wheat, rice or oats), or their starch fractions.

The implementations described above and other implementations are within the scope of the following claims. One skilled in the art will appreciate that the present disclosure can be practiced with embodiments other than those disclosed. The disclosed embodiments are presented for purposes of illustration and not limitation.

## Claims

1. A method of seasoning a cooked food product comprising cooked corn masa, said method comprising applying an oil seasoning mixture onto a surface of a cooked food product, the seasoning mixture comprising at least 35% wt solids, wherein the applying step comprises spraying the oil seasoning mixture onto a surface of a cooked food product with a spinning disc sprayer.

2. The method according to claim 1, wherein the cooked food product is a taco shell.

3. The method according to any of the preceding claims, wherein the oil seasoning mixture comprises at least 40% wt solids.

4. The method according to any of the preceding claims, wherein the applying step comprises spraying the oil seasoning mixture, at a temperature in a range from 38 to 60 degrees centigrade, onto the surface of a cooked food product.

5. The method according to any of the preceding claims, further comprising frying the food product in frying oil before the applying step.

6. The method according to claim 5, wherein the oil of the seasoning mixture is a same type of oil as the frying oil.

7. The method according to any of the preceding claims, wherein the applying step disposes from 1 to 3 grams of oil seasoning mixture onto the surface of the cooked food product.

8. The method according to any of the preceding claims, wherein the oil seasoning mixture comprises particles having a size of at least 250 micrometers.

9. The method according to any of the preceding claims, wherein the oil seasoning mixture comprises particles having a size of less than 30 micrometers.

10. The method according to any of the preceding claims, wherein the oil of the seasoning mixture is a solid at a temperature of 27 degrees centigrade.

11. The method according to any of the preceding claims, wherein the oil seasoning mixture comprises a range from 45 to 60% wt solids.

12. An apparatus for seasoning a cooked food product comprising:
a spinning disc spray chamber comprising a spinning disc sprayer and having a product zone configured to receive a oil seasoning mixture from the spinning disc sprayer, the oil seasoning mixture comprising at least 35% wt solids;
a food product conveyor for continuously moving a cooked food product through the product zone, wherein the cooked food product comprises cooked corn masa.

13. The apparatus according to claim 12, wherein the cooked food product is a corn masa taco shell.

14. The apparatus according to claim 13, further comprising a progressive cavity pump providing the oil seasoning mixture to the spinning disc sprayer.

## Patentansprüche

1. Verfahren zum Würzen eines gegarten Lebensmittelprodukts, das gegarten Maisteig umfasst, wobei das Verfahren das Aufbringen einer Ölwürzmischung auf eine Oberfläche eines gegarten Lebensmittelprodukts umfasst, wobei die Würzmischung wenigstens 35 Gewichtsprozent Feststoffe umfasst, wobei der Schritt des Aufbringens das Aufsprühen der Ölwürzmischung auf eine Oberfläche eines gegarten Lebensmittelprodukts mit einer Schleuderscheibensprühvorrichtung umfasst.

2. Verfahren nach Anspruch 1, wobei es sich bei dem gegarten Lebensmittelprodukt um ein Taco handelt.

3. Verfahren nach einem der vorhergehenden Ansprüche, wobei die Ölwürzmischung wenigstens 40 Gewichtsprozent Feststoffe umfasst.

4. Verfahren nach einem der vorhergehenden Ansprüche, wobei der Schritt des Aufbringens das Aufsprühen der Ölwürzmischung bei einer Temperatur in einem Bereich von 38 bis 60 Grad Celsius auf die Oberfläche eines gegarten Lebensmittelprodukts umfasst.

5. Verfahren nach einem der vorhergehenden Ansprüche, ferner umfassend das Braten des Lebensmittelprodukts in Bratöl vor dem Schritt des Aufbringens.

6. Verfahren nach Anspruch 5, wobei das Öl der Würzmischung von der gleichen Art Öl wie das Bratöl ist.

7. Verfahren nach einem der vorhergehenden Ansprüche, wobei der Schritt des Aufbringens 1 bis 3 Gramm der Ölwürzmischung auf die Oberfläche des gegarten Lebensmittelprodukts verteilt.

8. Verfahren nach einem der vorhergehenden Ansprüche, wobei die Ölwürzmischung Partikel umfasst, die eine Größe von wenigstens 250 Mikrometern aufweisen.

9. Verfahren nach einem der vorhergehenden Ansprüche, wobei die Ölwürzmischung Partikel umfasst, die eine Größe von weniger als 30 Mikrometern aufweisen.

10. Verfahren nach einem der vorhergehenden Ansprüche, wobei es sich bei dem Öl der Würzmischung um einen Feststoff bei einer Temperatur von 27 Grad Celsius handelt.

11. Verfahren nach einem der vorhergehenden Ansprüche, wobei die Ölwürzmischung Feststoffe in einem Bereich von 45 bis 60 Gewichtsprozent umfasst.

12. Vorrichtung zum Würzen eines gegarten Lebensmittelprodukts, umfassend:
eine Schleuderscheibensprühvorrichtungskammer, die eine Schleuderscheibensprühvorrichtung umfasst und einen Produktbereich aufweist, der dazu ausgelegt ist, eine Ölwürzmischung von der Schleuderscheibensprühvorrichtung aufzunehmen, wobei die Ölwürzmischung wenigstens 35 Gewichtsprozent Feststoffe umfasst,
einen Lebensmittelproduktförderer zum kontinuierlichen Bewegen eines gegarten Lebensmittelprodukts durch den Produktbereich, wobei das gegarte Lebensmittelprodukt gegarten Maisteig umfasst.

13. Vorrichtung nach Anspruch 12, wobei es sich bei dem gegarten Lebensmittelprodukt um ein Maisteig-Taco handelt.

14. Vorrichtung nach Anspruch 13, ferner umfassend eine Exzenterschneckenpumpe, die die Schleuderscheibensprühvorrichtung mit der Ölwürzmischung versorgt.

## Revendications

1. Procédé d'assaisonnement d'un produit alimentaire cuit comprenant de la purée de maïs cuite, ledit procédé comprenant l'application d'un mélange d'assaisonnement huileux sur une surface d'un produit alimentaire cuit, le mélange d'assaisonnement comprenant au moins 35 % en poids de matière solide, dans lequel l'étape d'application comprend la pulvérisation du mélange d'assaisonnement huileux sur une surface d'un produit alimentaire cuit à l'aide d'un pulvérisateur à disque rotatif.

2. Procédé selon la revendication 1, dans lequel le produit alimentaire cuit est une coquille à tacos.

3. Procédé selon l'une quelconque des revendications précédentes, dans lequel le mélange d'assaisonnement huileux contient au moins 40 % en poids de matière solide.

4. Procédé selon l'une quelconque des revendications précédentes, dans lequel l'étape d'application comprend la pulvérisation du mélange d'assaisonnement huileux à une température dans une gamme de 38 degrés à 60 degrés centigrade, sur la surface d'un produit alimentaire cuit.

5. Procédé selon l'une quelconque des revendications précédentes, comprenant en outre la friture du produit alimentaire dans une huile de friture avant l'étape d'application.

6. Procédé selon la revendication 5, dans lequel le mélange d'assaisonnement huileux est un même type d'huile que l'huile de friture.

7. Procédé selon l'une quelconque des revendications précédentes, dans lequel l'étape d'application dépose de 1 à 3 grammes de mélange d'assaisonnement huileux sur la surface du produit alimentaire.

8. Procédé selon l'une quelconque des revendications précédentes, dans lequel le mélange d'assaisonnement huileux comprend des particules dont la taille est d'au moins 250 micromètres.

9. Procédé selon l'une quelconque des revendications précédentes, dans lequel le mélange d'assaisonnement huileux comprend des particules dont la taille est inférieure à 30 micromètres.

10. Procédé selon l'une quelconque des revendications précédentes, dans lequel l'huile du mélange d'assaisonnement est une matière solide à une température de 27 degrés.

11. Procédé selon l'une quelconque des revendications précédentes, dans lequel le mélange d'assaisonnement huileux contient une quantité de 45 à 60 % en poids de matière solide.

12. Appareil pour assaisonner un produit alimentaire cuit, comprenant:
une chambre de pulvérisation à disque rotatif comprenant un pulvérisateur à disque rotatif et présentant une zone de produit configurée de manière à recevoir un mélange d'assaisonnement huileux à partir du pulvérisateur à disque rotatif, le mélange d'assaisonnement huileux contenant au moins 35 % en poids de matière solide;
un transporteur de produit alimentaire pour déplacer de façon continue un produit alimentaire cuit à travers la zone de produit, dans lequel le produit alimentaire cuit comprend de la purée de mais cuite.

13. Appareil selon la revendication 12, dans lequel le produit alimentaire cuit est une coquille à tacos de purée de mais.

14. Appareil selon la revendication 13, comprenant en outre une pompe à cavité progressive qui fournit le mélange d'assaisonnement huileux au pulvérisateur à disque rotatif.
